# EUROPÄISCHE PATENTSCHRIFT

(11) **EP 1 681 559 B1**
(45) Veröffentlichungstag und Bekanntmachung des Hinweises auf die Patenterteilung: **10.02.2010**
(21) Anmeldenummer: 05028619.4
(22) Anmeldetag: 29.12.2005
(51) Int. Cl.: G01N 21/90, B07C 5/34, G01B 11/24

(54) **Verfahren und Vorrichtung zum Prüfen einer Dichtfläche einer Behältermündung**
Method and device for testing a sealing surface of a container aperture
Procédé et dispositif pour contrôler la surface d'étanchéité de l'ouverture d' un récipient

(30) Priorität: 13.01.2005 DE 102005001810
(43) Veröffentlichungstag der Anmeldung: 19.07.2006
(73) Patentinhaber: Heye International GmbH, 31683 Obernkirchen (DE)
(72) Erfinder: Schmidt, Peter, 31749 Auetal (DE); Stüwe, Hartwin, 31683 Obernkirchen (DE)
(74) Vertreter: Callies, Rainer Michael

(56) Entgegenhaltungen:
- EP-A- 0 047 936
- WO-A-98/19150
- DE-A1- 2 916 361
- DE-A1- 3 147 086
- PATENT ABSTRACTS OF JAPAN Bd. 014, Nr. 296 (P-1067), 26. Juni 1990 (1990-06-26) -& JP 02 093347 A (SHOKUHIN SANGYO ONRAIN SENSOR GIJUTSU KENKYU KUMIAI), 4. April 1990 (1990-04-04)

## Beschreibung

Die Erfindung bezieht sich auf ein Verfahren zum Prüfen einer Behältermündung, insbesondere der Mündung eines Hohlglasgegenstands, auf Fehler einer Dichtfläche der Mündung, wobei mittels einer Lichtquelle Lichtstrahlen so auf die Mündung ausgesandt werden, dass sie eine tangential auf die Dichtfläche treffende Richtungskomponente aufweisen und bei Auftreffen auf einen Fehler der Dichtfläche gestreut werden, wobei zumindest ein Teil solcher Streulichtstrahlen mittels eines Sensors detektiert wird.

Ferner betrifft die Erfindung eine Vorrichtung zum Prüfen einer Behältermündung, insbesondere der Mündung eines Hohlglasgegenstands, auf Fehler einer Dichtfläche der Mündung, aufweisend eine Lichtquelle, Mittel zur Beleuchtung der Mündung durch Lichtstrahlen, die eine tangential auf die Dichtfläche treffende Richtungskomponente aufweisen und bei Auftreffen auf einen Fehler der Dichtfläche gestreut werden, und einen Sensor, mit dem zumindest ein Teil solcher Streulichtstrahlen detektiert wird.

Bei dem Behälter kann es sich insbesondere um eine Glasflasche oder ein Weithalsglas handeln. Die Mündung kann insbesondere eine Mündung zum Verschließen mittels eines Kronenkorkens oder eine Schraubmündung sein.

Bei der Herstellung von Glasflaschen kann es zu einer Reihe von Fehlern in der Dichtfläche der Flaschenmündung kommen. Damit die Dichtfläche problemlos mit dem vorgesehenen Verschlusselement zusammenwirken kann und insbesondere Undichtigkeiten vermieden werden, ist es wichtig, z.B. radial über die Mündungsfläche verlaufende Falten zu detektieren und die entsprechenden Behälter auszusortieren. Weitere mögliche Fehlerstellen in der Dichtfläche sind Ausbrüche, Orangenhaut oder auch andere Fehler. Risse im Dichtbereich einer Getränkeflasche können der Ausgangspunkt von örtlichem Ausbrechen des Mündungsrandes sein und stellen somit eine Gefahr dar, wenn ein Verbraucher aus der Flasche trinkt.

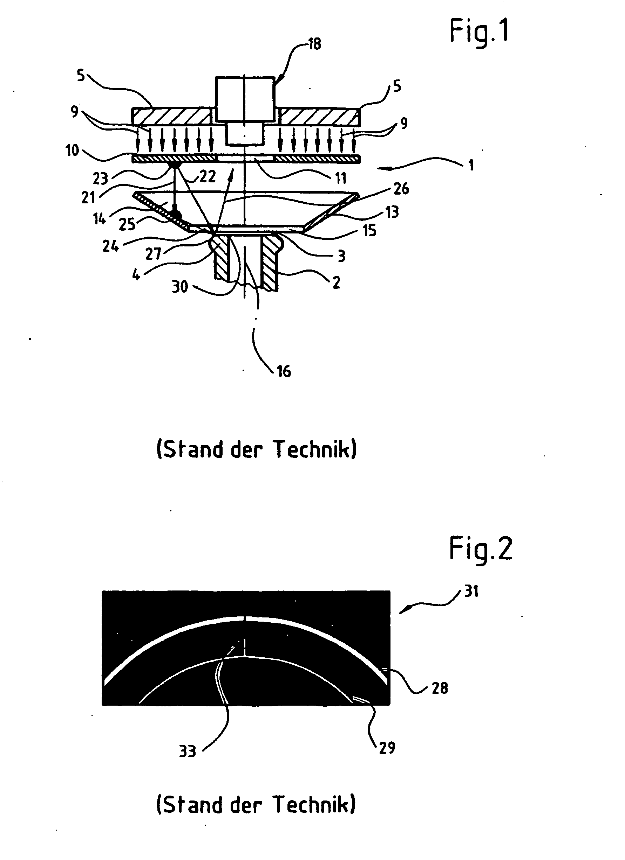

Es ist bekannt, Fehler in der Dichtfläche dadurch zu detektieren, dass Licht auf die Dichtfläche gesandt wird und mittels einer Kamera Licht detektiert wird, das diffus von Fehlerstellen in der Dichtfläche gestreut wird. Eine aus der Praxis bekannte Prüfvorrichtung (der Firma Heye International GmbH) ist in Fig. 1 dargestellt. Die bekannte Prüfvorrichtung ist mit 1 bezeichnet. Unterhalb der Prüfvorrichtung 1 befindet sich eine nur teilweise gezeigte Glasflasche 2, bei der eine Dichtfläche 3 einer Mündung 4 mittels der Prüfvorrichtung 1 geprüft wird.

Die Prüfvorrichtung 1 weist eine Lichtquelle 5 auf, die Lichtstrahlen 9 senkrecht bzw. nahezu senkrecht auf eine Diffusorscheibe 10 aussendet. Die Diffusorscheibe 10 weist mittig eine Öffnung 11 auf.

Unterhalb der Diffusorscheibe 10 ist ein diffuser Reflektor 13 angeordnet. Der Reflektor 13 ist kragenförmig um die Mündung 4 herum positioniert und weist eine reflektierende Innenfläche 14 auf. Der Reflektor 13 besitzt eine untere Öffnung 15, unter der die Mündung 4 positioniert ist. Der Reflektor 13 kann z.B. aus Eisen hergestellt sein und auf der Innenfläche 14 eine weiße Farbschicht zur Reflexion des Lichtes aufweisen. Oberhalb der Öffnung 11 der Diffusorscheibe 10 ist symmetrisch zu einer Längsachse 16 der Mündung 4 als Sensor eine Kamera 18 angeordnet. Ein Gehäuse der Prüfvorrichtung 1 ist in Fig. 1 nicht gezeigt. Das von der Lichtquelle 5 auf die Diffusorscheibe 10 ausgesandte Licht besteht nicht nur aus parallelen Lichtstrahlen 9, sondern auch aus Lichtstrahlen (nicht dargestellt), die nicht senkrecht auf die Diffusorscheibe 10 treffen. Die Lichtquelle 5 kann z.B. eine Reihe von Leuchtdioden (nicht gezeigt) aufweisen, die einen Abstrahlöffnungswinkel von 30 bis 40° haben. Durch die Diffusorscheibe 10 wird das auftreffende Licht diffus, also in alle Richtungen gestreut. Exemplarisch sind zwei Streulichtstrahlen 21 und 22 dargestellt. Weitere Streulichtstrahlen sind ansatzweise bei 23 gezeigt. Der Lichtstrahl 21 fällt parallel zur Mündungslängsachse 16 auf den Reflektor 13. Das Licht gemäß Lichtstrahl 21 wird durch den Reflektor 13 wiederum in alle möglichen Richtungen gestreut, wie durch den Lichtstrahl 24 und bei 25 durch ansatzweise Lichtstrahlen dargestellt ist.

Der Lichtstrahl 24 gelangt durch die Öffnung 15 des Reflektors 13 hindurch auf die Dichtfläche 3. Da die Dichtfläche 3 glatt ist, wird der Lichtstrahl 24 unter einem Winkel entsprechend der Neigung der Glasoberfläche reflektiert. Der resultierende reflektierte Lichtstrahl ist mit 26 bezeichnet. Der reflektierte Lichtstrahl 26 resultiert ferner aus einer Streuung des Lichtstrahls 22, der, ohne vorher auf den Reflektor 13 zu treffen, auf die Dichtfläche 3 gelangt und dort ebenfalls reflektiert wird. Die beiden Lichtstrahlen 24 und 22 treffen nahe beieinander, aber nicht genau an derselben Stelle auf die Dichtfläche 3. Da die Dichtfläche 3 in dem Bereich eine starke Krümmung aufweist, werden beide Strahlen in sehr nahe nebeneinander liegenden Strahlen reflektiert, und vereinfacht ist nur ein resultierender Lichtstrahl, nämlich der Lichtstrahl 26, dargestellt. Auf diese Weise fällt ringförmig Licht in die Kamera 18, wodurch ein sogenannter Reflexionsring 28 entsteht, wie er in Fig. 2 gezeigt ist, die schematisch einen Ausschnitt aus einem von der Kamera 18 aufgenommenen Bild 31 zeigt. Der Vollständigkeit halber sei erwähnt, dass ein Teil des Lichtes, das auf die Dichtfläche 3 fällt, gebrochen wird und in das Glas der Mündung 4 eintritt.

Ein weiterer Reflexionsring 29 entsteht durch entsprechende Reflexion von Lichtstrahlen an einer Innenkante 30 der Mündung 4. Da die Innenkante 30 eine sehr viel stärkere Wölbung (nicht dargestellt) aufweist als die Außenkante 27, ist der innere Reflexionsring 29 schmaler als der äußere Reflexionsring 28. Der Übersichtlichkeit halber sind in Fig. 1 Lichtstrahlen, die den Reflexionsring 29 erzeugen, nicht eingezeichnet.

Licht, das zwischen der Außenkante 27 und der Innenkante 30 auf die Dichtfläche 3 trifft, wird zwar auch in eine bestimmte Richtung reflektiert, trifft aber nicht auf die Kamera 18. Somit erscheint in dem Kamerabild 31 dieser Bereich normalerweise dunkel. An fehlerhaften Stellen der Dichtfläche 3, wie Falten, Ausbrüchen, Orangenhaut und ähnlichen Fehlern, wird auftreffendes Licht diffus gestreut. Aufgrund dieser diffusen Streuung wird von diesen Fehlern auch Licht in die Kamera 18 gestreut. In Fig. 2 ist beispielhaft der Fall dargestellt, dass sich eine Falte etwa in radialer Richtung über die Dichtfläche 3 erstreckt. Aufgrund der Falte ergibt sich in dem Kamerabild 31 eine entsprechende helle Linie 33, die sich zwischen den beiden Reflexionsringen 28, 29 erstreckt.

Ein Problem in der praktischen Anwendung besteht darin, dass die Intensität der Reflexionsringe 28, 29 in der Regel deutlich stärker ist als die Intensität des aufgrund eines Fehlers der Dichtfläche 3 in die Kamera 18 gelangenden Lichtes 33. Es kommt zu einer Überlagerung des Fehlerabbildes 33 durch die Reflexionsringe 28, 29, wodurch es erschwert wird, Fehler in der Dichtfläche 3 zu erkennen.

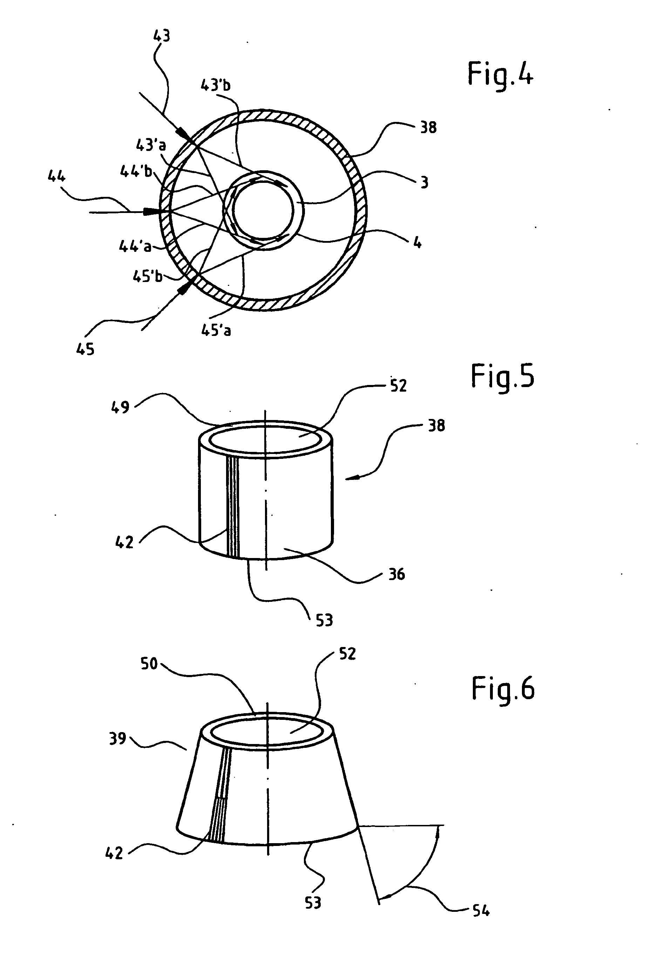

Aus der DE 35 18 653 C2 sind ein Verfahren bzw. eine Vorrichtung zur Prüfung von Flaschenmündungen auf Fehler bekannt. Störende Reflexionen von fehlerlosen Bereichen der Mündung werden dadurch vermieden, dass bestimmte Mündungsbereiche von einer Lichtquelle abgeschirmt werden. Dabei handelt es sich z.B. um einen oberen Mündungsbereich (siehe Fig. 4A). Nachteilig bei dieser Abschirmung ist, dass Fehler in den abgeschirmten Mündungsbereichen nicht erkannt werden können. Ferner ist aus der genannten Druckschrift auch bekannt, durch eine Abschirmung dafür zu sorgen, dass Lichtstrahlen mit tangentialer Ausrichtung auf den zu prüfenden Mündungsbereich fallen (siehe Fig. 4B). Lichtstrahlen, die tangential auf den zu prüfenden Mündungsbereich fallen, werden nicht nach oben und somit nicht in eine oberhalb der Mündung angeordnete Kamera reflektiert, sofern kein Fehler im Mündungsbereich vorhanden ist. Um die gewünschte Abschirmung zu erreichen, werden relativ aufwändige Lichtlenkeinrichtungen benötigt, beispielsweise ein ringförmiges Element mit tangential ausgerichteten Löchern oder mit Lichtlenkplatten. Zudem ist bei der bekannten Prüfvorrichtung nachteilig, dass keine gleichmäßige Ausleuchtung der zu prüfenden Dichtfläche erreicht wird und durch die Abschirmung insgesamt Lichtintensität verloren geht. Es ist auch nicht möglich, gleichzeitig zu beiden Seiten eine tangentiale Ablenkung mit den beschriebenen Lichtlenkeinrichtungen zu erreichen.

Auch aus der US 3 631 255 ist eine Vorrichtung zur Prüfung von Flaschenmündungen bekannt, wobei durch Abschirmung nur Lichtstrahlen mit einer tangentialen Ausrichtung auf die Mündung gelangen. Auch hierbei bleibt ein großer Teil des Lichtes der Lichtquellen ungenutzt, und es ist keine gleichmäßige Ausleuchtung der Mündung möglich.

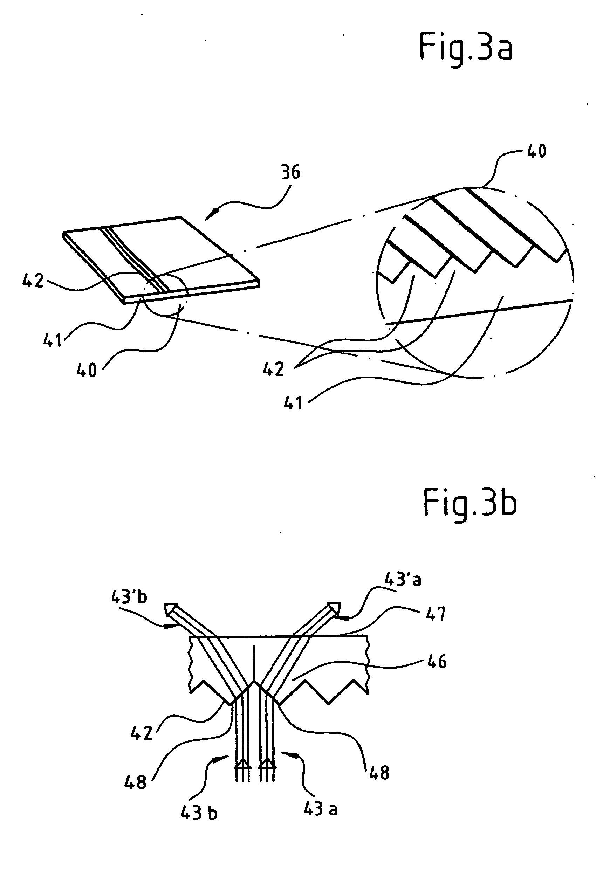

In der DE 36 86 847 T2 ist eine Prüfvorrichtung zum Detektieren von Fehlern an einem mit einem Schraubgewinde ausgestatteten Flaschenhals beschrieben. Auch bei dieser bekannten Prüfvorrichtung ist eine tangentiale Beleuchtung des zu prüfenden Bereiches vorgesehen. Die tangentiale Beleuchtung wird wiederum durch Bohrungen in einer ringförmigen Beleuchtungseinrichtung erreicht (siehe insbesondere Fig. 3 und 4).

In der DE 39 40 693 C1 ist eine Vorrichtung zur Mündungsprüfung beschrieben, bei der das Prinzip der Dunkelfeldbeleuchtung angewandt wird. Dabei wird das Licht in radialer Richtung auf eine Flaschenmündung gesandt. Nur von den Rändern der Flaschenmündung wird Licht in die Kamera reflektiert. Es ist keine tangentiale Beleuchtung zur Vermeidung von unerwünschten Reflexionen vorgesehen.

In der EP 0 657 732 A1 ist eine Vorrichtung zur optischen Prüfung eines durchsichtigen Mündungsbereichs beschrieben, bei der mittels einer im Wesentlichen homogenen Leuchtfläche unterhalb des zu prüfenden Bereichs dieser im Durchlicht betrachtet wird. Dieses Prüfverfahren beruht nicht auf der Auswertung von Reflexionen.

Eine ähnliche Prüfvorrichtung ist in der WO 98/19150 beschrieben. Dabei ist ein optischer Körper vorgesehen, welcher so in seiner Kontur gestaltet ist, dass das Licht beim Passieren des Körpers mehrfach durch innere Totalreflexionen umgelenkt wird. Tangentiale Richtungskomponenten von Lichtstrahlen sind nicht vorgesehen.

In der US 4 731 649 ist zur Mündungsprüfung eine im Wesentlichen radial zur Mündung angeordnete Beleuchtungseinrichtung beschrieben, die Licht diffus auf den Bereich unterhalb der Mündungsoberkante sendet. Eine selektive tangentiale Bestrahlung ist nicht vorgesehen.

In der US 2 868 061 ist eine Prüfvorrichtung für Mündungen von Glasbehältern vorgesehen, bei der als Sensor ein Photomultiplier verwendet wird. Selektiv Licht tangential auf die Mündung zu senden, ist nicht vorgesehen.

In der WO 90/04773 ist ein optisches System zur Aufnahme eines Bildes zum Prüfen von Behältermündungen beschrieben, wobei jedoch keine Beleuchtungseinrichtung verwendet wird.

Aus "Patent Abstract of Japan", Bd. 014, Nr. 296 (P-1067), 26. Juni 1990 -& JP 02 093347 A sind ein Verfahren bzw. eine Vorrichtung zum Prüfen einer Flaschenmündung auf Fehler einer Dichtfläche bekannt. Dabei wird mittels eines Lichtleiters Licht von einer Lichtquelle zu einem optischen Element geführt, welches das Licht über eine Reihe von gleichmäßig ringförmig angeordneten Austrittsöffnungen jeweils in einem tangential ausgerichteten Lichtstrahl auf die Dichtfläche aussendet. Licht, welches durch einen Fehler in der Dichtfläche von der Mündung aus nach oben gestreut wird, wird zur Detektion des Fehlers verwendet.

Die DE 31 47 086 A1 beschreibt ein Verfahren bzw. eine Vorrichtung, bei der ein tangentiales Auftreffen von Licht auf eine Flaschenmündung mittels eines Lichtleiters erreicht wird.

Der Erfindung liegt die Aufgabe zugrunde, ein Verfahren der anfangs genannten Art zum Prüfen einer Behältermündung zur Verfügung zu stellen, das mit einfachen Mitteln eine Kontrastverstärkung bei der Detektion von Fehlern in der Mündungsdichtfläche ermöglicht. Ferner liegt der Erfindung die Aufgabe zugrunde, eine Vorrichtung der anfangs genannten Art zur Durchführung eines Verfahrens vorzusehen, das mit einfachen Mitteln eine Kontrastverstärkung bei der Detektion von Fehlern in der Mündungsdichtfläche ermöglicht.

Die Aufgabe bezüglich des Verfahrens wird durch die Merkmale des Anspruchs 1 gelöst. Lichtstrahlen werden von einer Lichtquelle, die in der Regel oberhalb der zu prüfenden Mündung angeordnet ist, von oben auf die Dichtfläche gesandt. Die Lichtstrahlen weisen eine in der Ebene der Dichtfläche liegende Richtungskomponente auf, die tangential zu der Dichtfläche bzw. dem Rand der Mündung ausgerichtet ist. Es wird hier vereinfachend von der Ebene der Dichtfläche gesprochen, obwohl die Dichtfläche in Längsrichtung der Mündung eine Krümmung aufweist. Da die Lichtstrahlen von oben ausgesandt werden, weisen sie zusätzlich eine senkrechte Richtungskomponente auf. Ferner können die Lichtstrahlen in der Dichtflächenebene auch eine radiale, also zur Mitte bzw. einer Längsachse der Mündung weisende Richtungskomponente aufweisen. Die Lichtstrahlen werden überwiegend von der Dichtfläche reflektiert. Der größte Teil der genannten Lichtstrahlen wird in seitlicher Richtung reflektiert, so dass die reflektierten Lichtstrahlen nicht in einen vorzugsweise oberhalb der Mündung angeordneten Sensor gelangen. Treffen die auf die Dichtfläche fallenden Lichtstrahlen jedoch auf einen Fehler in der Dichtfläche, so werden sie in Form von Streulichtstrahlen gestreut, also diffus abgelenkt, und zumindest ein Teil der Streulichtstrahlen wird mittels des Sensors detektiert. Es kann sein, dass der Sensor auch einen Teil der reflektierten Lichtstrahlen detektiert. Dabei kann es sich um einen Restanteil reflektierter Lichtstrahlen handeln, die nicht seitlich sondern nach oben gerichtet sind. Es kann sich aber auch um eine absichtlich erzeugte Intensität von derartig reflektierten Lichtstrahlen handeln, wie unten näher erläutert wird.

Die tangentiale Richtungskomponente wird dadurch erzeugt, dass im Strahlengang zwischen der Lichtquelle und der Mündung ein optisches Ablenkelement angeordnet wird, welches zumindest für Licht bestimmter Wellenlänge transparent ist und auftreffende Lichtstrahlen dieser Wellenlänge entsprechend ablenkt. Das Ablenkelement ist also aus einem entsprechend transparenten Material hergestellt. Da die auf das Ablenkelement treffenden Lichtstrahlen zumindest in einem gewissen Maße diffus sein können, gibt es in der Regel auch Lichtstrahlen, die auch ohne die Einwirkung des Ablenkelements bereits eine tangentiale Richtungskomponente aufweisen. Indem die Lichtstrahlen durch das Ablenkelement lediglich abgelenkt werden, geht keine Lichtintensität verloren, sofern nicht wie unten beschrieben eine bestimmte Lichtfarbe herausgefiltert wird. Die Ablenkung der Lichtstrahlen wird gemäß der Erfindung mit einfachen Mitteln erreicht.

Bei dem erfindungsgemäßen Verfahren werden die Lichtstrahlen in zwei abgelenkte Strahlen geteilt, die aus dem Ablenkelement austreten. Dies geschieht durch die Verwendung eines entsprechenden Prismenelements. Und zwar weist das Ablenkelement eine Vielzahl von benachbart zueinander angeordneten, langgestreckten Strahlteilerprismen auf, die so unmittelbar aneinandergrenzend angeordnet sind, dass ein auftreffender Lichtstrahl an den Seitenflächen des Prismas eintritt. Somit kann auf einfache Weise eine symmetrische Teilung eines einfallenden Lichtstrahls in zwei Teilstrahlen, die eine tangentiale Richtungskomponente in der Dichtflächenebene aufweisen, erreicht werden. Denn bei Lichtstrahlen, die in der Dichtflächenebene lediglich eine radiale Richtungskomponente aufweisen, wird dadurch erreicht, dass zwei zu einem Radius der Mündung symmetrisch abgelenkte Strahlen auf die Dichtfläche treffen.

Es kann insbesondere vorgesehen sein, dass das Ablenkelement symmetrisch zu einer Längsachse einer zu prüfenden Mündung ist und zumindest teilweise oberhalb der Mündung angeordnet ist, wobei das Ablenkelement über seine Länge im Querschnitt einen größeren Umfang als die Mündung aufweist. Dabei können die Lichtstrahlen ringförmig auf das optische Ablenkelement gesandt werden. Auf diese Weise wird eine gleichmäßige Beleuchtung der Dichtfläche erreicht.

Es kann vorgesehen sein, dass alle Lichtstrahlen, die auf die Dichtfläche treffen, zuvor das Ablenkelement passiert haben müssen. In diesem Fall kann weitgehend verhindert werden, dass Reflexionsringe entstehen. Eine relativ geringe Reflexionsring-Intensität kann jedoch dadurch noch vorhanden sein, dass aufgrund eines diffusen Auftreffens der Lichtstrahlen auf das Ablenkelement auch radiale Lichtstrahlen vorhanden sind, die zu dem Sensor reflektiert und von diesem als Reflexionsring detektiert werden. Grundsätzlich ist es zwar vorteilhaft, wenn das Problem einer Überlagerung von Fehlerabbildern durch Reflexionsring-Intentsitäten vermieden werden kann. Andererseits können Reflexionsringe jedoch wünschenswert sein, um einen Auswertebereich in einem Bild zu positionieren, das mit einer als Sensor verwendeten Kamera aufgenommen worden ist. Dazu können auch Lichtstrahlen vorgesehen werden, die auf die Behältermündung ringförmig ausgesandt werden, ohne dass diese Lichtstrahlen vorher das Ablenkelement passiert haben. Bei diesen Lichtstrahlen sollte es sich zumindest zu einem großen Teil um Lichtstrahlen handeln, die in der Dichtflächenebene nur eine radiale Richtungskomponente aufweisen. Denn diese werden von der Dichtfläche, sofern sie nicht auf einen Fehler treffen, so zur Kamera reflektiert, dass sie zusammen in dem Kamerabild einen Reflexionsring erzeugen.

Zwar lässt sich durch geeignete Maßnahmen die Intensität dieser nicht abgelenkten Lichtstrahlen einstellen, jedoch erzeugen auch diese Lichtstrahlen, wenn sie von einer Fehlerstelle auf der Dichtfläche reflektiert werden, ein Abbild der Fehlerstelle in dem Kamerabild. Um das oben beschriebene Problem einer Überlagerung der Fehlerabbilder durch die Reflexionsringe zu umgehen, kann für die Lichtstrahlen, die das Ablenkelement passieren, und die Lichtstrahlen, die das optische Ablenkelement nicht passieren, Licht unterschiedlicher Farbe verwendet und eine Farbkamera eingesetzt werden. In diesem Fall weisen die Reflexionsringe praktisch nur eine Intensität in der Farbe der Lichtstrahlen auf, die das Ablenkelement nicht passiert haben. Die Fehlerstreulichtintensitäten hingegen setzen sich aus beiden Farben zusammen. Somit ist vorgesehen, dass die Fehler der Dichtfläche nur in der Farbe derjenigen Lichtstrahlen ausgewertet werden, die das Ablenkelement passiert haben, während die Reflexionsringe in der anderen Farbe ausgewertet werden.

Das Ablenkelement ist vorzugsweise hohlkegelstumpfförmig, wobei es sich in Richtung des Sensors verjüngt. Dabei können die Strahlteilerprismen auf der Mantelfläche oder auch auf der Innenfläche des Hohlkegelstumpfes angeordnet sein.

Die Aufgabe bezüglich der Vorrichtung wird durch die Merkmale des Anspruchs 6 gelöst. Die Vorrichtung weist eine Lichtquelle und Beleuchtungsmittel auf, um die Mündung durch Lichtstrahlen zu beleuchten, die eine tangential auf die Dichtfläche treffende Richtungskomponente aufweisen, also in der Dichtflächenebene eine tangentiale Richtungskomponente haben. Ferner weist die Vorrichtung einen Sensor auf, mit dem Streulichtstrahlen, die durch Streuung von Lichtstrahlen an einem Fehler der Dichtfläche entstanden sind, detektiert werden können. Dadurch, dass die Beleuchtungsmittel ein zumindest für Licht bestimmter Wellenlänge transparentes optisches Ablenkelement aufweisen, das im Strahlengang zwischen der Lichtquelle und der Mündung angeordnet ist und auftreffende Lichtstrahlen dieser Wellenlänge zur Erzeugung der tangentialen Richtungskomponente ablenkt, sind die bezüglich des Verfahrens genannten Vorteile erreicht. Das Ablenkelement weist ein solchermaßen transparentes Material auf.

Das Ablenkelement ist ein im Querschnitt zumindest im Wesentlichen symmetrischer Hohlkörper, der teilweise oder ganz oberhalb der Mündung bzw. der Dichtfläche angeordnet ist und sowohl an einem oberen als auch an einem unteren Ende offen ist. Dabei kann sich oberhalb des oberen Endes der Sensor befinden, und ein zu prüfender Behälter kann unterhalb des unteren Endes des Hohlkörpers positioniert werden. Bei dem Hohlkörper kann es sich um einen Hohlzylinder handeln.

Das optische Element ein Strichteilerelement. Hierbei handelt es sich um ein Element mit einer Vielzahl von benachbart zueinander angeordneten, langgestreckten Strahlteilerprismen. Insbesondere können die Strahlteilerprismen unmittelbar aneinandergrenzen, so dass alle auftreffenden und durchgelassenen Lichtstrahlen abgelenkt werden.

Vorzugsweise besitzt das Ablenkelement die Form eines Hohlkegelstumpfes. Ein Vorteil einer Hohlkegelstumpfform besteht darin, dass senkrecht von der Lichtquelle ausgesandte Lichtstrahlen in einem größeren Winkel auf das Ablenkelement treffen als bei einer Hohlzylinderform und dadurch eine stärkere Ablenkung erfahren.

Das Ablenkelement kann ein Grundkörper mit einer daran befestigten Folie, die eine Vielzahl von benachbart zueinander angeordneten, langgestreckten Strahlteilerprismen aufweist, sein. Im Folgenden wird eine Folie mit einer solchen Vielzahl von Strahlteilerprismen als "Strichteilerfolie" bezeichnet. Die Strichteilerfolie kann auf einer Innenfläche oder einer Außenfläche des Grundkörpers befestigt sein. Das Ablenkelement kann auch aus einer entsprechend zu der gewünschten Form zusammengebogenen Strichteilerfolie bestehen.

Die Beleuchtungsmittel sind vorzugsweise so ausgelegt, dass die Lichtstrahlen symmetrisch bzw. gleichmäßig auf die Mündung bzw. Dichtfläche treffen. Dies kann insbesondere dadurch gewährleistet sein, dass im Strahlengang zwischen der Lichtquelle und dem Ablenkelement eine Diffusorscheibe angeordnet ist, die in Ausrichtung mit der Behältermündung und dem über der Diffusorscheibe angeordneten Sensor eine Durchlassöffnung für reflektierte Lichtstrahlen aufweist. Die Lichtquelle kann gleichmäßig Lichtstrahlen auf den gesamten, die Durchlassöffnung umgebenden Bereich der Diffusorscheibe senden. Durch die Diffusorscheibe wird das Licht diffus gestreut, und es gelangt teilweise auf das Ablenkelement. Auf diese Weise wird eine möglichst gleichmäßige Ausleuchtung des Ablenkelements erreicht. Alternativ oder zusätzlich kann ein diffuser Reflektor in dem Strahlengang zwischen der Lichtquelle und der Mündung angeordnet sein. Dieser Reflektor ist vorzugsweise symmetrisch zu einer Längsachse der Mündung und weist mittig eine Durchlassöffnung für Lichtstrahlen auf, die von der Dichtfläche reflektiert werden. Durch den Reflektor können Lichtstrahlen insbesondere auf das Ablenkelement reflektiert werden. Der Reflektor kann die Form eines Hohlkegelstumpfes aufweisen, der sich in Richtung der zu prüfenden Mündung verjüngt. Durch solch einen Reflektor kann die von der Lichtquelle erzeugte Lichtintensität besonders gut ausgenutzt werden.

Die Beleuchtung des Ablenkelements kann natürlich auch auf eine andere Weise erfolgen, z.B. durch eine ringförmige Lichtquelle, die direkt Licht auf das Ablenkelement aussendet.

Wie oben für das Verfahren beschrieben, können die Beleuchtungsmittel so ausgelegt sein, dass auf die Behältermündung auch Lichtstrahlen ringförmig so ausgesandt werden, dass sie Reflexionsringe in dem Sensor bzw. einer Kamera erzeugen. Dies wird dadurch erreicht, dass die Lichtstrahlen nicht durch das Ablenkelement hindurchgeschickt werden. Beispielsweise kann zwischen dem Ablenkelement und der Durchlassöffnung eines verwendeten diffusen Reflektors ein Abstand vorgesehen sein, so dass Lichtstrahlen direkt von dem Reflektor auf die zu prüfende Dichtfläche gelangen können. Diese Lichtstrahlen erzeugen, wenn sie in der Ebene der Mündung eine radiale Richtungskomponente aufweisen, die genannten Reflexionsringe. Diese können zur Positionierung eines Auswertebereiches des Sensors bzw. der Kamera verwendet werden.

Vorteilhafterweise sind die Beleuchtungsmittel so ausgelegt, dass die Lichtstrahlen, die das Ablenkelement passieren, eine andere Farbe aufweisen als die Lichtstrahlen, die das Ablenkelement nicht passieren. Dabei wird als Sensor eine Farbkamera verwendet, und wie oben beschrieben kann für die Positionierung des Auswertebereiches mittels der Reflexionsringe ein einfarbiges Bild in der einen Farbe und für die Sichtbarmachung von Fehlern der Dichtfläche ein einfarbiges Bild in der anderen Farbe verwendet werden. Beide Bilder können mit der Farbkamera gleichzeitig aufgenommen, jedoch für die nachfolgende Auswertung voneinander getrennt werden.

Um die genannten Lichtstrahlen unterschiedlicher Farbe zu erzeugen, kann z.B. vorgesehen sein, das Ablenkelement aus einem optischen Material herzustellen, das nur Licht einer bestimmten Farbe durchlässt. Dies kann auch durch Anbringung eines Farbfilters, beispielsweise an der Innen- oder Außenseite eines Grundkörpers, erfolgen. Zusätzlich kann zwischen dem Ablenkelement und dem diffusen Reflektor ein Farbfilter, der die gewünschte andere Farbe hindurchlässt, angebracht werden. Alternativ kann auch ein Abstand zwischen der Diffusorscheibe und einem oberen offenen Ende des Ablenkelements vorgesehen sein, um die direkt auf die Dichtfläche fallenden Lichtstrahlen zu erzeugen. Eine weitere Möglichkeit zur Erzeugung dieser Strahlen besteht darin, einen freien Abstand zwischen einem unteren und einem oberen Teil des Ablenkelements vorzusehen. Bei diesen weiteren Ausführungsformen kann jeweils der zweite Farbfilter in den Abstandsbereichen eingesetzt werden.

Weiterhin kann das jeweilige Licht einer bestimmten Farbe auch dadurch erzeugt werden, dass zwei Lichtquellen verwendet werden, die jeweils das gewünschte farbige Licht emittieren. Damit nur das Licht der gewünschten Farbe durch das Ablenkelement fällt, kann dieses durch eine entsprechende Lichtabschirmung von dem Licht der anderen Farbe getrennt werden.

Im Folgenden wird die Erfindung anhand von Ausführungsbeispielen näher erläutert, wobei auf die Figuren Bezug genommen wird. Es zeigen:
Fig.1 eine aus der Praxis bekannte Prüfvorrichtung in einer schematischen Schnittansicht,
Fig. 2 einen Ausschnitt aus einer schematischen Prinzipdarstellung eines mit einer Kamera der Prüfvorrichtung der Fig. 1 aufgenommenen Bildes,
Fig. 3a schematisch eine an sich bekannte Strichteilerfolie mit einer vergrößerten Ausschnittsdarstellung,
Fig. 3b schematisch das Prinzip der Ablenkung von Lichtstrahlen durch einen Prismenstreifen einer Strichteilerfolie,
Fig. 4 schematisch das der Erfindung zugrunde liegende Prinzip der Strahlablenkung durch das optische Ablenkelement,
Fig. 5 eine perspektivische Ansicht einer ersten Ausführungsform eines erfindungsgemäßen optischen Ablenkelements,
Fig. 6 eine perspektivische Ansicht einer zweiten Ausführungsform eines erfindungsgemäßen optischen Ablenkelements,
Fig. 7 eine schematische Schnittansicht einer ersten Ausführungsform einer erfindungsgemäßen Prüfvorrichtung und einer Flaschenmündung,
Fig. 8 eine schematische Schnittansicht einer zweiten Ausführungsform einer erfindungsgemäßen Prüfvorrichtung und einer Flaschenmündung,
Fig. 9 eine schematische Schnittansicht einer dritten Ausführungsform einer erfindungsgemäßen Prüfvorrichtung und einer Flaschenmündung.

In allen Figuren sind gleiche Merkmale mit gleichen Bezugszeichen versehen.

Fig. 3a zeigt eine Strichteilerfolie 36, wie sie als Bestandteil eines unten beschriebenen optischen Ablenkelements 38 bzw. 39 verwendet werden kann. Die Strichteilerfolie 36 weist, wie insbesondere aus einem vergrößerten Ausschnitt 40 zu erkennen ist, eine ebene Basis 41 auf. Eine Seite der Basis 41 ist vollständig mit parallelen Prismenstreifen 42 (nur einige sind gezeigt) besetzt, die unmittelbar aneinandergrenzen. Bei den Prismenstreifen 42 handelt es sich um langgestreckte Prismen aus lichtdurchlässigem Material. Wie in Fig. 3b gezeigt ist, werden Lichtstrahlen, die senkrecht zu einer glatten Unterseite 47 der Strichteilerfolie 36 ausgerichtet sind und auf Seitenflächen 48 der Prismenstreifen 42 auftreffen, gebrochen. Durch die Prismenbasis 46 hindurch gelangen die gebrochenen Lichtstrahlen zu der glatten Unterseite 47 der Strichteilerfolie 36 und werden dort erneut gebrochen. Durch Einwirkung des entsprechenden Prismenstreifens 42 resultieren aus den Lichtstrahlen 43a die Lichtstrahlen 43'a und aus den Lichtstrahlen 43b die Lichtstrahlen 43'b. In Fig. 3b sind Lichtstrahlen 43a und 43b zur Verdeutlichung des Ablenkprinzips getrennt dargestellt, sie können aber als zusammen einen Lichtstrahl 43 bildend angesehen werden (siehe Fig. 4).

Eine auf diese Weise erzeugte Ablenkung von Lichtstrahlen wird erfindungsgemäß verwendet, um Lichtstrahlen tangential auf eine zu prüfende Dichtfläche 3 einer Behältermündung 4 zu senden. In Fig. 4 ist dieses Prinzip dargestellt. Lichtstrahlen 43, 44 und 45 weisen in der Dichtflächenebene, die gleich der Zeichenebene ist, lediglich eine radiale Richtungskomponente auf. Die Lichtstrahlen 43, 44 und 45 treffen auf ein optisches Ablenkelement 38, welches in Fig. 5 dargestellt ist. Das Ablenkelement 38 weist einen transparenten, hohlzylinderförmigen Grundkörper 49 auf. Auf dem Grundkörper 49 ist eine Strichteilerfolie 36 so befestigt, dass sie die gesamte Außenfläche des Ablenkelements 38 bedeckt und die jeweilige Basis 46 der paraxialen Prismenstreifen 42 nach innen weist. Wie oben erläutert ist, werden die Lichtstrahlen 43, 44 und 45 durch die Prismenstreifen 42 jeweils in zwei Lichtstahlen 43'a, 43'b, 44'a, 44'b, 45'a und 45'b geteilt, welche in der Dichtflächenebene sowohl eine tangentiale als auch noch eine radiale Komponente aufweisen (nicht getrennt dargestellt). Da die tangentialen Lichtstrahlen 43'a, 43'b, 44'a, 44'b, 45'a und 45'b tangential über die Mündung streichen, werden sie durch die Dichtfläche 3 seitlich reflektiert und nicht nach oben aus der Dichtflächenebene heraus, wie unten näher erläutert wird.

In Fig. 6 ist ein anderes optisches Ablenkelement 39 dargestellt, welches sich von dem Ablenkelement 38 dadurch unterscheidet, dass es einen transparenten, hohlkegelstumpfförmigen Grundkörper 50 aufweist. Die Ablenkelemente 38 und 39 weisen jeweils ein oberes offenes Ende 52 und ein unteres offenes Ende 53 auf. Der in Fig. 6 mit 54 bezeichnete Winkel zwischen der Mantelfläche des Ablenkelements 39 und der Horizontalen kann insbesondere 30° bis 80° betragen.

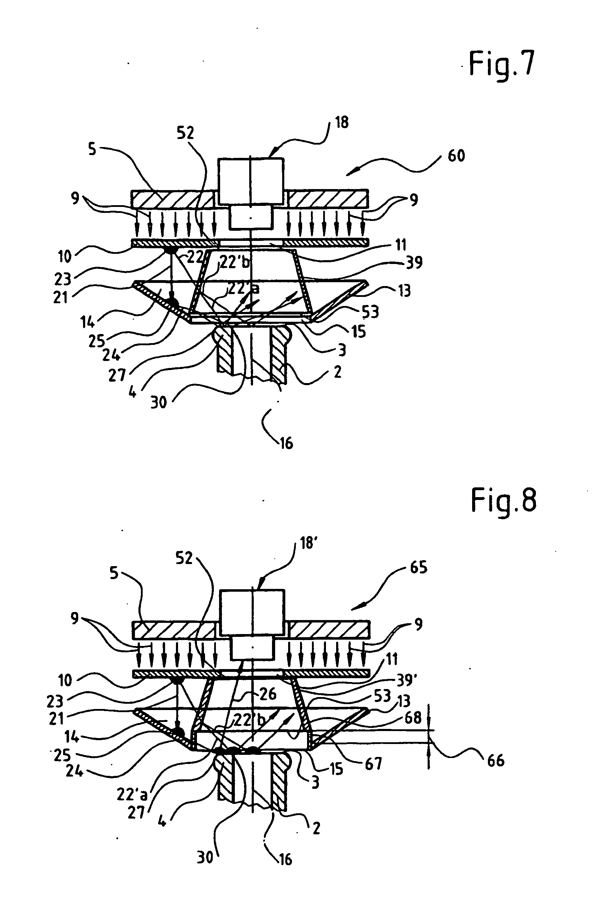

Die erfindungsgemäße Prüfvorrichtung gemäß Fig. 7 ist mit 60 bezeichnet. Im Vergleich zu der bekannten Prüfvorrichtung 1 weist die Prüfvorrichtung 60 zusätzlich ein optisches Ablenkelement 39 auf, das paraxial zwischen der Mündung 4 und der Kamera 18 angeordnet ist. Das Ablenkelement 39 ist mit seinem unteren offenen Ende 53 ohne einen Abstand über der unteren Öffnung 15 des diffusen Reflektors 13 angebracht. Das obere offene Ende 52 des Ablenkelements 39 befindet sich unmittelbar unterhalb der Öffnung 11 der Diffusorscheibe 10.

Auf diese Weise wird erreicht, dass Lichtstrahlen, die die Diffusorscheibe 10 verlassen, entweder direkt auf das Ablenkelement 39 fallen, was z.B. für den Lichtstrahl 22 der Fall ist, oder auf die Innenfläche 14 des Reflektors 13 fallen, wie dies für den Lichtstrahl 21 der Fall ist. Der Lichtstrahl 22 wird durch das Ablenkelement 39, wie oben beschrieben worden ist, in zwei Strahlen 22'a und 22'b geteilt bzw. abgelenkt. Die beiden abgelenkten Lichtstrahlen 22'a und 22'b besitzen eine tangentiale Richtungskomponente in der Ebene der Dichtfläche 3 und werden bei ihrem Auftreffen auf die Dichtfläche 3 nicht nach oben in die paraxial angeordnete Kamera 18 reflektiert, sondern seitlich reflektiert. Je stärker die Ablenkung der auf das Ablenkelement 39 fallenden Lichtstrahlen ist, desto geringer ist die Intensität von nach oben in die Kamera 18.gerichteten, reflektierten Lichtstrahlen. Eine stärkere Ablenkung kann dadurch erreicht werden, dass der Winkel 54 des Ablenkelements 39 kleiner gemacht wird.

Der durch Reflexion an dem Reflektor 13 entstandene Lichtstrahl 24 fällt ebenfalls auf das Ablenkelement 39 und wird wie der Lichtstrahl 22 in zwei Lichtstrahlen (dargestellt, aber ohne Bezugszeichen) aufgeteilt bzw. abgelenkt. Auch diese Lichtstrahlen weisen wiederum eine tangentiale Richtungskomponente auf und werden beim Auftreffen auf die Dichtfläche 3 nicht in die Kamera 18 reflektiert.

Statt des Ablenkelements 39 könnte auch das Ablenkelement 38 verwendet werden. In diesem Fall würde jedoch das Licht vom inneren Rand der Diffusorscheibe 10 sehr flach auf die Mantelfläche des Ablenkelements 38 treffen und nur unter einem sehr kleinen Winkel aufgespalten werden. Dem könnte dadurch entgegengewirkt werden, dass der Durchmesser der Öffnung 11 der Diffusorscheibe 10 größer gemacht und entsprechend die bestrahlte Fläche der Diffusorscheibe 10 angepasst würde.

Die erfindungsgemäße Prüfvorrichtung gemäß Fig. 8 ist mit 65 bezeichnet. Die Prüfvorrichtung 65 unterscheidet sich von der Prüfvorrichtung 60 dadurch, dass es beabsichtigt ist, Reflexionsringe zu erzeugen, um mit ihnen eine Positionierung eines Auswertebereiches einer Farbkamera 18' vorzunehmen. Die Reflexionsringe werden dadurch erzeugt, dass ein Ablenkelement 39' in einem Abstand 66 über dem Reflektor 13 angeordnet ist. In dem Zwischenraum 66 ist ein hohlzylinderförmiger grüner Farbfilter 67 angeordnet. Lichtstrahlen, wie z.B. der Lichtstrahl 24, welche unter dem Ablenkelement 39' vorbei und durch den Farbfilter 67 hindurch auf die Dichtfläche 3 fallen, erzeugen somit grüne Reflexionsringe in der Farbkamera 18'.

Der Grundkörper des Ablenkelements 39' stellt einen roten Farbfilter 68 dar. Lichtstrahlen, die wie der Lichtstrahl 22 auf das Ablenkelement 39' fallen, werden daher zu rotem Licht. Wie oben beschrieben tragen die Lichtstrahlen dieses roten Lichtes nicht zu den Reflexionsringen bei, sondern gelangen nur dann in die Farbkamera 18', wenn sie an Fehlern auf der Dichtfläche 3 diffus in die Kamera 18' gestreut werden. Somit erfolgt die Positionierung des Auswertebereichs mittels der Reflexionsringe in einem Grünkanal des Bildes und die Auswertung auf mögliche Fehler in einem Rotkanal des Bildes. Selbstverständlich können auch andere Farben bzw. andere Farbfilter verwendet werden. Der Vorteil der Verwendung unterschiedlicher Farben besteht darin, dass die Intensität des aus der Lichtquelle 5 ausgesandten Lichtes erhöht werden kann, ohne dass in dem erzeugten Kamerabild eine Überblendung von Fehlerabbildern durch die Reflexionsringe stattfindet. Die Empfindlichkeit der Farbkamera 18' für rotes Licht kann beliebig höher sein als die Empfindlichkeit für grünes Licht. Dies ist sehr vorteilhaft, weil die Zuverlässigkeit und Genauigkeit der Fehlerdetektion mit der Lichtleistung zunimmt.

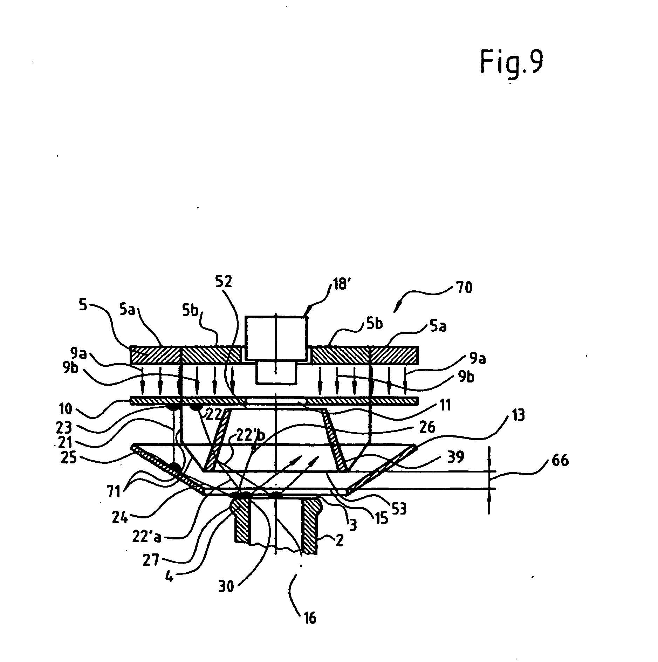

Die erfindungsgemäße Prüfvorrichtung gemäß Fig. 9 ist mit 70 bezeichnet. Die Prüfvorrichtung 70 unterscheidet sich von der Prüfvorrichtung 65 dadurch, dass Licht unterschiedlicher Farbe durch zwei unterschiedliche Lichtquellen 5a und 5b erzeugt wird, die Bestandteil einer Lichtquelle 5 sind. Die Lichtquelle 5a sendet grüne Lichtstrahlen 9a und die Lichtquelle 5b rote Lichtstrahlen 9b aus. Durch eine Abschirmung 71 ist dafür gesorgt, dass Lichtstrahlen, die aus der Lichtquelle 5a herrühren, nicht auf das Ablenkelement 39 fallen und andererseits keine Lichtstrahlen, die aus der Lichtquelle 5b herrühren, unter dem Ablenkelement 39 vorbei durch den Zwischenraum 66 hindurch auf die Dichtfläche 3 fallen und so zu Reflexionsringen in einem von der Farbkamera 18' aufgenommenen Bild beitragen. Bei der Prüfvorrichtung 70 werden keine Filter benötigt. Die Lichtquellen 5a und 5b können z.B. jeweils einen Satz grüner bzw. roter Leuchtdioden aufweisen. Auch bei der Prüfvorrichtung 70 ergeben sich die bei der Prüfvorrichtung 65 beschriebenen Vorteile.

## Patentansprüche

1. Verfahren zum Prüfen einer Behältermündung (4), insbesondere der Mündung (4) eines Hohlglasgegenstands (2), auf Fehler einer Dichtfläche (3) der Mündung (4),
wobei mittels einer Lichtquelle (5) Lichtstrahlen (22'a,22'b,43'a,43'b,44'a, 44'b,45'a,45'b) so auf die Mündung (4) ausgesandt werden, dass sie eine tangential auf die Dichtfläche (3) treffende Richtungskomponente aufweisen und bei Auftreffen auf einen Fehler der Dichtfläche (3) gestreut werden, wobei zumindest ein Teil solcher Streulichtstrahlen (26) mittels eines Sensors (18;18') detektiert wird,
wobei die tangentiale Richtungskomponente erzeugt wird, indem im Strahlengang zwischen der Lichtquelle (5) und der Mündung (4) ein optisches Ablenkelement (38;39;39') angeordnet wird, welches eine Vielzahl von benachbart zueinander angeordneten, langgestreckten Strahlteilerprismen (42) aufweist und zumindest für Licht bestimmter Wellenlänge transparent ist und solche auftreffenden Lichtstrahlen (22,43,44,45) entsprechend ablenkt,
und wobei die Strahlteilerprismen so unmittelbar aneinandergrenzend angeordnet sind, dass ein auftreffender Lichtstrahl an den Seitenflächen des Prismas eintritt, wodurch die Lichtstrahlen (22,43,44,45) durch das optische Ablenkelement (38;39;39') jeweils in zwei Lichtstrahlen (22'a,22'b, 43'a,43'b,44'a,44'b,45'a, 45'b) geteilt werden.

2. Verfahren nach Anspruch 1,
**dadurch gekennzeichnet, dass** das optische Ablenkelement (38;39;39') so symmetrisch zu einer Längsachse (16) der Mündung (4) geformt und zumindest teilweise oberhalb der Mündung (4) angeordnet ist, dass es über seine Länge im Querschnitt einen größeren Umfang als die Mündung (4) aufweist, wobei Lichtstrahlen (22,43,44,45) ringförmig auf das optische Ablenkelement (38;39;39') treffen.

3. Verfahren nach Anspruch 1 oder 2,
**dadurch gekennzeichnet, dass** zusätzlich Lichtstrahlen (24), ohne vorher das optische Ablenkelement (38;39;39') zu passieren, auf die Behältermündung (4) ringförmig so ausgesandt werden, dass sie in der Ebene der Dichtfläche (3) nur eine radiale Richtungskomponente aufweisen und von der Dichtfläche (3) zu dem Sensor (18;18') reflektiert werden und dass dadurch entstehende Reflexionsringe (28,29) zur Positionierung eines Auswertebereiches eines Bildes (31) benutzt werden, das mittels einer den Sensor darstellenden Kamera (18:18') aufgenommen worden ist.

4. Verfahren nach Anspruch 3,
**dadurch gekennzeichnet, dass** für die Lichtstrahlen (22,43,44,45), die das optische Ablenkelement (38;39;39') passieren, und die Lichtstrahlen (24), die das optische Ablenkelement (38;39;39') nicht passieren, Licht unterschiedlicher Farbe verwendet wird und
dass die Kamera eine Farbkamera (18') ist, wobei durch Fehler der Dichtfläche (3) hervorgerufene Lichtintensitäten (33) des Kamerabildes (31) in einer anderen Farbe ausgewertet werden als die Reflexionsringe (28,29).

5. Verfahren nach einem der vorhergehenden Ansprüche,
**dadurch gekennzeichnet, dass** das optische Ablenkelement (39;39') hohlkegelstumpfförmig mit einer Verjüngung in Richtung des Sensors (18;18') ausgebildet ist.

6. Vorrichtung (60,65,70) zum Prüfen einer Behältermündung (4), insbesondere der Mündung eines Hohlglasgegenstands (2), auf Fehler einer Dichtfläche (3) der Mündung (4), aufweisend eine Lichtquelle (5), Mittel (10,13, 38;39;39') zur Beleuchtung der Mündung (4) durch Lichtstrahlen (22'a,22'b, 43'a,43'b,44'a,44'b,45'a,45'b), die eine tangential auf die Dichtfläche (3) treffende Richtungskomponente aufweisen und bei Auftreffen auf einen Fehler der Dichtfläche (3) gestreut werden, und einen Sensor (18;18'), mit dem zumindest ein Teil solcher Streulichtstrahlen (26) detektiert wird,
wobei die Beleuchtungsmittel (10,13,38;39;39') ein optisches Ablenkelement (38;39;39') aufweisen, das im Strahlengang zwischen der Lichtquelle (5) und der Mündung (4) angeordnet ist und zumindest für Licht bestimmter Wellenlänge transparent ist und solche auftreffenden Lichtstrahlen (22,43,44,45) zur Erzeugung der tangentialen Richtungskomponente ablenkt,
und wobei das optische Ablenkelement (38;39;39') ein im Querschnitt symmetrischer Hohlkörper mit einer Vielzahl von benachbart zueinander angeordneten, langgestreckten Strahlteilerprismen (42) ist, wobei der Hohlkörper zumindest teilweise oberhalb der Mündung (4) angeordnet ist und an einem oberen (52) und einem unteren (53) Ende offen ist.

7. Vorrichtung nach Anspruch 6,
**dadurch gekennzeichnet, dass** das optische Ablenkelement (38) hohlzylinderförmig ist.

8. Vorrichtung nach Anspruch 6,
**dadurch gekennzeichnet, dass** das optische Ablenkelement (39;39') hohlkegelstumpfförmig mit einer Verjüngung in Richtung des Sensors (18; 18') ausgebildet ist.

9. Vorrichtung nach einem der Ansprüche 6 bis 8,
**dadurch gekennzeichnet, dass** das Element (38;39;39') einen Grundkörper (49;50) aufweist, wobei auf einer zu der Lichtquelle (5) gerichteten Grundkörperfläche eine Folie (36), die die Vielzahl von benachbart zueinander angeordneten, langgestreckten Strahlteilerprismen (42) aufweist, befestigt ist.

10. Vorrichtung nach einem der Ansprüche 6 bis 9,
**dadurch gekennzeichnet, dass** im Strahlengang zwischen der Lichtquelle (5) und dem optischen Ablenkelement (38;39;39') eine Diffusorscheibe (10) angeordnet ist, wobei die Diffusorscheibe (10) eine Öffnung (11) aufweist, die im Strahlengang vor dem Sensor (18;18') angeordnet ist, und dass die Lichtquelle (5) gleichmäßig Lichtstrahlen (9) auf den restlichen Bereich der Diffusorscheibe (10) aussendet.

11. Vorrichtung nach einem der Ansprüche 6 bis 10,
**dadurch gekennzeichnet, dass** im Strahlengang zwischen der Lichtquelle (5) und der Mündung (4) ein diffuser Reflektor (13) angeordnet ist, der symmetrisch zu einer Längsachse (16) der Mündung (4) ist und eine über der Mündung (4) angeordnete Öffnung (15) zum Hindurchlassen von Lichtstrahlen (26) aufweist, die von der Dichtfläche (3) reflektiert werden.

12. Vorrichtung nach einem der Ansprüche 6 bis 11,
**dadurch gekennzeichnet, dass** die Beleuchtungsmittel (10,13,38;39;39') so ausgelegt sind, dass zusätzlich Lichtstrahlen (24), ohne vorher das optische Ablenkelement (38;39;39') zu passieren, auf die Behältermündung (4) ringförmig so ausgesandt werden, dass sie in der Ebene der Dichtfläche (3) nur eine radiale Richtungskomponente aufweisen und von der Dichtfläche (3) so reflektiert werden, dass sie in dem Sensor (18;18') Reflexionsringe (28,29) erzeugen.

13. Vorrichtung nach den Ansprüchen 11 und 12,
**dadurch gekennzeichnet, dass** das optische Ablenkelement (38;39;39') so in einem Abstand (66) über der Öffnung (15) des diffusen Reflektors (13) angeordnet ist, dass Lichtstrahlen (24) direkt von dem diffusen Reflektor (13) auf die Dichtfläche (3) gelangen.

14. Vorrichtung nach Anspruch 12 oder 13,
**dadurch gekennzeichnet, dass** die Lichtquelle (5,5a,5b) und die Beleuchtungsmittel (10,13,38;39;39',67,68,71) so ausgelegt sind, dass die Lichtstrahlen (22,43,44,45), die das optische Ablenkelement (38;39;39') passieren, eine andere Farbe aufweisen als die Lichtstrahlen (24), die das optische Ablenkelement (38;39;39') nicht passieren, und
dass der Sensor eine Farbkamera (18') ist, wobei durch Fehler der Dichtfläche (3) hervorgerufene Lichtintensitäten (33) eines Kamerabildes (31) in einer anderen Farbe ausgewertet werden als die Reflexionsringe (28,29).

15. Vorrichtung nach Anspruch 14,
**dadurch gekennzeichnet, dass** das optische Ablenkelement (39') einen Farbfilter (68) darstellt und dass zwischen dem optischen Ablenkelement (39') und dem von diesem beabstandeten diffusen Reflektor (13) ein Farbfilter (67) eingesetzt ist.

16. Vorrichtung nach Anspruch 14,
**dadurch gekennzeichnet, dass** zur Erzeugung der Lichtstrahlen (22,24) unterschiedlicher Farbe zwei unterschiedliche Farblichtquellen (5a,5b) verwendet werden und eine Abschirmung (71) im Strahlengang angeordnet ist, die die zum Passieren des Ablenkelements (39) vorgesehenen Lichtstrahlen (9b,22) an einer Vermischung mit den anderen Lichtstrahlen (9a,21,24) hindert.

## Claims

1. Method of examining a container mouth (4), in particular the mouth (4) of a hollow glass article (2), for defects in a sealing surface (3) of the mouth (4),
wherein a light source (5) serves to emit light beams (22'a,22'b,43'a,43'b,44'a,44'b,45'a,45'b) on to the mouth (4) such that they comprise a direction component impinging tangentially upon the sealing surface (3) and are scattered as they impinge upon a defect in the sealing surface (3), wherein at least some of these scattered light beams (26) are detected by means of a sensor (18;18'),
wherein the tangential direction component is produced in that in the beam path between the light source (5) and the mouth (4) there is disposed an optical deflecting element (38;39;39') which comprises a multiplicity of elongated beam splitter prisms (42) disposed adjacent to one another, is transparent at least to light of a certain wavelength and deflects such impinging light beams (22,43,44,45) accordingly,
and wherein the beam splitter prisms are disposed directly adjoining one another such that an impinging light beam enters at the lateral surfaces of the prism, whereby the light beams (22, 43, 44, 45) are divided by the optical deflecting element (38;39;39') in each case into two light beams (22'a,22'b,43'a,43'b,44'a,44'b,45'a,45'b).

2. Method as claimed in claim 1,
**characterised in that** the optical deflecting element (38;39;39') is formed symmetrically with respect to a longitudinal axis (16) of the mouth (4) and is disposed at least partially above the mouth (4) such that over its length the said deflecting element comprises in cross-section a larger circumference than the mouth (4), wherein light beams (22,43,44,45) impinge in an annular manner upon the optical deflecting element (38;39;39').

3. Method as claimed in claim 1 or 2,
**characterised in that** in addition, without previously passing the optical deflecting element (38;39;39'), light beams (24) are emitted in an annular manner on to the container mouth (4) such that in the plane of the sealing surface (3) they comprise only a radial direction component and are reflected by the sealing surface (3) to the sensor (18; 18') and that reflection rings (28,29) thus produced are used to position an evaluation region of an image (31) which has been recorded by means of a camera (18;18') operating as the sensor.

4. Method as claimed in claim 3,
**characterised in that** light of a different colour is used for the light beams (22,43,44,45) which pass the optical deflecting element (38;39;39') and for the light beams (24) which do not pass the optical deflecting element (38;39;39'), and
that the camera is a colour camera (18'), wherein light intensities (33) of the camera image (31) which are produced by defects in the sealing surface (3) are evaluated in a different colour than the reflection rings (28,29).

5. Method as claimed in any one of the preceding claims,
**characterised in that** the optical deflecting element (39;39') is formed in the shape of a hollow truncated cone tapering in the direction of the sensor (18;18').

6. Device (60,65,70) for examining a container mouth (4), in particular the mouth of a hollow glass article (2), for defects in a sealing surface (3) of the mouth (4), comprising a light source (5), means (10,13,38;39;39') for illuminating the mouth (4) by means of light beams (22'a,22'b,43'a,43'b,44'a,44'b,45'a,45'b) which comprise a direction component impinging tangentially upon the sealing surface (3) and are scattered as they impinge upon a defect in the sealing surface (3), and a sensor (18; 18') which is used to detect at least some of these scattered light beams (26),
wherein the illumination means (10,13,38;39;39') comprise an optical deflecting element (38;39;39') which is disposed in the beam path between the light source (5) and the mouth (4) and is transparent at least to light of a certain wavelength and deflects such impinging light beams (22,43,44,45) to produce the tangential direction component,
and wherein the optical deflecting element (38;39;39') is a hollow body which is symmetrical in cross-section and has a multiplicity of elongated beam splitter prisms (42) disposed adjacent one another, wherein the hollow body is disposed at least partially above the mouth (4) and is open at an upper end (52) and a lower end (53).

7. Device as claimed in claim 6,
**characterised in that** the optical deflecting element (38) is hollow-cylindrical.

8. Device as claimed in claim 6,
**characterised in that** the optical deflecting element (39;39') is formed in the shape of a hollow truncated cone tapering in the direction of the sensor (18; 18').

9. Device as claimed in any one of claims 6 to 8,
**characterised in that** the element (38;39;39') comprises a basic body (49;50), wherein a film (36) which comprises a multiplicity of elongated beam splitter prisms (42) disposed adjacent one another is attached to a basic body surface which is directed to the light source (5).

10. Device as claimed in any one of claims 6 to 9,
**characterised in that** in the beam path between the light source (5) and the optical deflecting element (38;39;39') there is disposed a diffuser disc (10), wherein the diffuser disc (10) comprises an orifice (11) which is disposed in the beam path upstream of the sensor (18;18'), and that the light source (5) uniformly emits light beams (9) on to the remaining region of the diffuser disc (10).

11. Device as claimed in any one of claims 6 to 10,
**characterised in that** in the beam path between the light source (5) and the mouth (4) there is disposed a diffuse reflector (13) which is symmetrical with respect to a longitudinal axis (16) of the mouth (4) and comprises an orifice (15), which is disposed above the mouth (4), to allow the passage of light beams (26) which are reflected by the sealing surface (3).

12. Device as claimed in any one of claims 6 to 11,
**characterised in that** the illumination means (10,13,38;39;39') are designed in such a manner that in addition, without previously passing the optical deflecting element (38;39;39'), light beams (24) are emitted in an annular manner on to the container mouth (4) such that in the plane of the sealing surface (3) they comprise only a radial direction component and are reflected by the sealing surface (3) in such a manner that they produce reflection rings (28,29) in the sensor (18;18').

13. Device as claimed in claims 11 and 12,
**characterised in that** the optical deflecting element (38;39;39') is disposed at a spaced interval (66) above the orifice (15) of the diffuse reflector (13) such that light beams (24) pass directly from the diffuse reflector (13) on to the sealing surface (3).

14. Device as claimed in claim 12 or 13,
**characterised in that** the light source (5,5a,5b) and the illumination means (10,13,38;39;39',67,68,71) are designed in such a manner that the light beams (22,43,44,45) which pass the optical deflecting element (38;39;39') comprise a different colour than the light beams (24) which do not pass the optical deflecting element (38;39;39'), and
that the sensor is a colour camera (18'), wherein light intensities (33) of a camera image (31) which are produced by defects in the sealing surface (3) are evaluated in a different colour than the reflection rings (28,29).

15. Device as claimed in claim 14,
**characterised in that** the optical deflecting element (39') is a colour filter (68) and that a colour filter (67) is inserted between the optical deflecting element (39') and the diffuse reflector (13) which is spaced apart therefrom.

16. Device as claimed in claim 14,
**characterised in that** in order to produce the light beams (22,24) of a different colour two different colour light sources (5a,5b) are used and in the beam path there is disposed a shield (71) which prevents the light beams (9b,22), which are intended to pass the deflecting element (39), from mixing with the other light beams (9a,21,24).

## Revendications

1. Procédé de contrôle des défauts d'une surface d'étanchéité (3) d'une embouchure (4) de récipient, en particulier de l'embouchure (4) d'un objet en verre creux (2),
où, au moyen d'une source lumineuse (5), des rayons lumineux (22'a, 22'b, 43'a, 43'b, 44'a, 44'b, 45'a, 45'b) sont projetés vers l'embouchure (4) de manière à présenter une composante directionnelle tangentiellement incidente sur la surface d'étanchéité (3) et à être dispersés à l'incidence sur un défaut de la surface d'étanchéité (3), au moins une partie de tels rayons de lumière diffuse (26) étant détectées au moyen d'un capteur (18 ; 18'),
où la composante directionnelle tangentielle est générée en disposant un élément de déflexion optique (38 ; 39 ; 39') sur le trajet des rayons entre la source lumineuse (5) et l'embouchure (4), lequel comporte une pluralité de prismes diviseurs de rayons (42) à extension longitudinale, contigus les uns aux autres, est transparent au moins pour une lumière d'une longueur d'onde définie et dévie en conséquence de tels rayons lumineux incidents (22, 43, 44, 45),
et où les prismes diviseurs de rayons sont disposés directement contigus les uns aux autres de telle manière qu'un rayon lumineux incident pénètre sur les surfaces latérales du prisme, entraînant ainsi la division de chaque rayon lumineux (22, 43, 44, 45) en deux rayons lumineux (22'a, 22'b, 43'a, 43'b, 44'a, 44'b, 45'a, 45'b) au travers de l'élément de déflexion optique (38 ; 39 ; 39').

2. Procédé selon la revendication 1,
**caractérisé en ce que** l'élément de déflexion optique (38 ; 39 ; 39') est formé symétriquement par rapport à un axe longitudinal de l'embouchure (4) et est disposé au moins partiellement au-dessus de l'embouchure (4), de telle manière que sa section présente sur sa longueur une circonférence supérieure à celle de l'embouchure (4), les rayons lumineux (22, 43, 44, 45) étant annulairement incidents sur l'élément de déflexion optique (38 ; 39 ; 39').

3. Procédé selon la revendication 1 ou la revendication 2,
**caractérisé en ce que** des rayons lumineux (24) sont en outre annulairement projetés vers l'embouchure (4) sans traverser d'abord l'élément de déflexion optique (38 ; 39 ; 39'), de manière à ne présenter qu'une composante directionnelle radiale sur le plan de la surface d'étanchéité (3) et à être réfléchis vers le capteur (18 ; 18') par la surface d'étanchéité (3), et **en ce que** les anneaux de réflexion (28, 29) ainsi formés sont utilisés pour le positionnement d'une zone d'évaluation d'une image (31) qui a été enregistrée au moyen d'une caméra (18 ; 18') représentant le capteur.

4. Procédé selon la revendication 3,
**caractérisé en ce que** des lumières de couleurs différentes sont utilisées pour les rayons lumineux (22, 43, 44, 45) qui traversent l'élément de déflexion optique (38 ; 39 ; 39'), et les rayons lumineux (24) qui ne traversent pas l'élément de déflexion optique (38 ; 39 ; 39'), et
**en ce que** la caméra est une caméra couleur (18'), les intensités lumineuses (33) de l'image de caméra (31) engendrées par les défauts de la surface d'étanchéité (3) étant évaluées dans une couleur différente de celle des anneaux de réflexion (28, 29).

5. Procédé selon l'une des revendications précédentes,
**caractérisé en ce que** l'élément de déflexion optique (39 ; 39') est réalisé sous forme de cône tronqué creux se rétrécissant en direction du capteur (18 ; 18').

6. Dispositif (60, 65, 70) pour le contrôle des défauts d'une surface d'étanchéité (3) d'une embouchure (4) de récipient, en particulier de l'embouchure (4) d'un objet en verre creux (2), comportant une source lumineuse (5), des moyens (10, 13, 38 ; 39 ; 39') pour l'éclairage de l'embouchure par des rayons lumineux (22'a, 22'b, 43'a, 43'b, 44'a, 44'b, 45'a, 45'b) présentant une composante directionnelle tangentiellement incidente sur la surface d'étanchéité (3) et dispersés à l'incidence sur un défaut de la surface d'étanchéité (3), et un capteur (18 ; 18') au moyen duquel au moins une partie de tels rayons de lumière diffuse (26) sont détectés,
où les moyens d'éclairage (10, 13, 38 ; 39 ; 39') comportent un élément de déflexion optique (38; 39 ; 39') disposé sur le trajet des rayons entre la source lumineuse (5) et l'embouchure (4), lequel est transparent au moins pour une lumière d'une longueur d'onde définie et dévie de tels rayons lumineux incidents (22, 43, 44, 45) pour générer la composante directionnelle tangentielle,
et où l'élément de déflexion optique (38 ; 39 ; 39') est un corps creux de section symétrique avec une pluralité de prismes diviseurs de rayons (42) à extension longitudinale, contigus les uns aux autres, ledit corps creux étant disposé au moins partiellement au-dessus de l'embouchure (4) et étant ouvert à une extrémité supérieure (52) et à une extrémité inférieure (53).

7. Dispositif selon la revendication 6,
**caractérisé en ce que** l'élément de déflexion optique (38) est en forme de cylindre creux.

8. Dispositif selon la revendication 6,
**caractérisé en ce que** l'élément de déflexion optique (39 ; 39') est en forme de cône tronqué creux se rétrécissant en direction du capteur (18; 18').

9. Dispositif selon l'une des revendications 6 à 8,
**caractérisé en ce que** l'élément (38 ; 39 ; 39') comporte un corps de base (49 ; 50), un film (36) comportant une pluralité de prismes diviseurs de rayons (42) à extension longitudinale, contigus les uns aux autres, étant fixé sur une surface de corps de base dirigée vers la source lumineuse (5).

10. Dispositif selon l'une des revendications 6 à 9,
**caractérisé en ce qu'**un disque diffuseur (10) est disposé sur le trajet des rayons entre la source lumineuse (5) et l'élément de déflexion optique (38; 39 ; 39'), ledit disque diffuseur (10) présentant une ouverture (11) disposée devant le capteur (18; 18') sur le trajet des rayons, et **en ce que** la source lumineuse (5) projette de manière homogène des rayons lumineux (9) sur la zone restante du disque diffuseur (10).

11. Dispositif selon l'une des revendications 6 à 10,
**caractérisé en ce qu'**un réflecteur diffus (13) est disposé sur le trajet des rayons entre la source lumineuse (5) et l'embouchure (4), lequel est symétrique par rapport à un axe longitudinal (16) de l'embouchure (4) et comporte une ouverture (15) disposée au-dessus de l'embouchure (4) pour le passage des rayons lumineux (26) réfléchis par la surface d'étanchéité (3).

12. Dispositif selon l'une des revendications 6 à 11,
**caractérisé en ce que** les moyens d'éclairage (10, 13, 38 ; 39 ; 39') sont conçus pour que des rayons lumineux (24) soient en outre annulairement projetés vers l'embouchure (4) sans traverser d'abord l'élément de déflexion optique (38 ; 39 ; 39'), de manière à ne présenter qu'une composante directionnelle radiale sur le plan de la surface d'étanchéité (3) et à être réfléchis par la surface d'étanchéité (3) de manière à générer des anneaux de réflexion (28, 29) sur le capteur (18 ; 18').

13. Dispositif selon les revendications 11 et 12,
**caractérisé en ce que** l'élément de déflexion optique (38 ; 39 ; 39') est disposé à intervalle (66) au-dessus de l'ouverture (15) du réflecteur diffus (13), de telle manière que des rayons lumineux (24) arrivent directement du réflecteur diffus (13) sur la surface d'étanchéité (3).

14. Dispositif selon la revendication 12 ou la revendication 13,
**caractérisé en ce que** la source lumineuse (5, 5a, 5b) et les moyens d'éclairage (10, 13, 38 ; 39 ; 39', 67, 68, 71) sont conçus pour que les rayons lumineux (24, 43, 44, 45) traversant l'élément de déflexion optique (38 ; 39 ; 39') soient de couleur différente de celle des rayons (24) ne traversant pas l'élément de déflexion optique (38 ; 39 ; 39'), et
**en ce que** le capteur est une caméra couleur (18'), les intensités lumineuses (33) d'une image de caméra (31) engendrées par des défauts de la surface d'étanchéité (3) étant évaluées dans une couleur différente de celle des anneaux de réflexion (28, 29).

15. Dispositif selon la revendication 14,
**caractérisé en ce que** l'élément de déflexion optique (39') représente un filtre chromatique (68), et **en ce qu'**un filtre chromatique (67) est mis en place entre l'élément de déflexion optique (39') et le réflecteur diffus (13) espacé de celui-ci.

16. Dispositif selon la revendication 14,
**caractérisé en ce que** deux sources de lumière colorée différentes (5a, 5b) sont utilisées pour générer les rayons lumineux (22, 24) de couleurs différentes et **en ce qu'**un écran (71) est disposé sur le trajet des rayons, lequel empêche les rayons lumineux (9b, 22) prévus pour traverser l'élément de déflexion optique (39) de se mélanger avec les autres rayons lumineux (9a, 21, 24).
